# FASCICULE DE BREVET EUROPEEN

(11) **EP 3 266 652 B1**
(45) Date de publication et mention de la délivrance du brevet: **03.06.2020**
(21) Numéro de dépôt: 17177469.8
(22) Date de dépôt: 06.12.2012
(51) Int. Cl.: F21S 41/147, F21S 41/155, F21S 41/663, F21S 41/32, F21S 41/36, B60Q 1/00

(54) **MODULE D'ÉCLAIRAGE GÉNÉRATEUR D'UN ENTRELACEMENT DE BANDES LUMINEUSES**
BELEUCHTUNGSMODUL, DAS EINE VERBINDUNG VON LEUCHTBÄNDERN HERSTELLT
LIGHTING MODULE GENERATING A NETWORK OF LIGHT BEAMS

(30) Priorité: 19.12.2011 FR 1161906
(43) Date de publication de la demande: 10.01.2018
(62) Demande divisionnaire de: 12195800.3
(73) Titulaire: Valeo Vision, 93012 Bobigny Cedex (FR)
(72) Inventeur: ALBOU, Pierre, 93012 BOBIGNY Cedex (FR); REISS, Benoit, 93012 BOBIGNY Cedex (FR); SANCHEZ, Vanesa, 93012 BOBIGNY Cedex (FR)

(56) Documents cités:
- EP-A1- 2 278 217
- EP-A2- 2 037 167
- EP-A2- 2 184 532
- EP-A2- 2 280 215
- JP-A- 2010 067 417

## Description

Le secteur technique de la présente invention est celui des dispositifs ou moyens d'éclairage et/ou de signalisation pour véhicule automobile.

Il existe un besoin, dans le domaine de l'automobile, de pouvoir illuminer la route empruntée par le véhicule en un "mode éclairage route partiel", à savoir générer dans un faisceau route une ou plusieurs plages sombres correspondant aux endroits où sont présents des véhicules venant en sens inverse ou des véhicules roulant devant, de manière à éviter l'éblouissement des autres conducteurs tout en éclairant la route dans sa plus grande surface. Une telle fonction est appelée ADB (Adaptive Driving Beam en anglais).

Le document EP 2 037 167 A2 montre qu'il est connu de généré une distribution lumineuse permettant cette fonction ADB en utilisant, dans un même phare, une pluralité de dispositifs optiques générant des bandes lumineuses complémentaires. Il est connu de générer cette fonction en alignant une pluralité de sources lumineuses et en pilotant l'allumage ou l'extinction de ces sources. Or, cette solution technique laisse apparaître des fentes non éclairées entre chaque bande lumineuse créée par les sources lumineuses. Un tel défaut résulte du fait que ces sources lumineuses ne peuvent pas être totalement jointives les unes à côté des autres, la technologie employée pour ces sources imposant une distance minimum entre chaque source.

Le document EP2278217A7 divulgue un module d'éclairage pour véhicule automobile remplissant une telle fonction. Il comprend une pluralité d'émetteurs lumineux, chaque émetteur lumineux étant associé à une lentille et à un miroir disposé en arrière de chaque lentille, pour renvoyer les rayons lumineux provenant de l'émetteur associé vers la lentille. Ainsi, chaque ensemble constitué de l'émetteur, de la lentille et du miroir génère une bande lumineuse, une multiplicité de bandes lumineuses ainsi créées formant un faisceau lumineux global. L'allumage ou l'extinction de certaines de ces bandes lumineuses formées verticalement permet de délimiter une zone sombre dans laquelle le véhicule dont on souhaite éviter l'éblouissement est placé.

Ce module de l'art antérieur présente un inconvénient. En effet, l'efficacité et la finesse de la fonction ADB résident dans un nombre important de bandes lumineuses, par exemple douze bandes lumineuses. Selon le document de l'art antérieur indiqué ci-dessus, ceci implique l'implantation dans un projecteur de véhicule automobile douze émetteurs, douze miroirs et douze lentilles. La place disponible dans le projeteur ne permet pas de loger tous ces composants, ce qui, en pratique, empêche l'utilisation du module selon cet art antérieur.

Par ailleurs, cette multiplicité de composants grève le coût de la fonction et empêche ainsi son implantation sur des véhicules de gamme moyenne et bas de gamme.

Enfin, la fonction ADB générée par ces douze ensembles implique une gestion des déperditions thermiques et un alignement de chacun des douze ensembles les uns vis-à-vis des autres.

On comprend donc que l'implantation de la solution de l'art antérieur est à l'origine de problèmes techniques majeurs.

Le but de la présente invention est donc de résoudre les inconvénients décrits ci-dessus principalement en prévoyant un premier module optique qui comprend une multiplicité d'émetteurs lumineux sur un même support espacés les uns des autres de sorte à créer une fenêtre non-éclairée par le premier module optique, un deuxième module optique étant agencé pour produire une bande lumineuse qui vient combler la fenêtre non-éclairée. Les inventeurs vont ainsi à l'encontre de la pratique courante qui tend à rapprocher les sources dans le but de limiter les zones non éclairées.

L'invention a donc pour objet un module tel que défini dans la revendication 1. Un tel module comprend par exemple au moins un premier dispositif d'éclairage et un deuxième dispositif d'éclairage, le premier dispositif d'éclairage comprend un support commun à au moins un premier émetteur lumineux générateur d'une première bande lumineuse et à au moins un deuxième émetteur lumineux générateur d'une deuxième bande lumineuse, le premier émetteur lumineux étant agencé par rapport au deuxième émetteur lumineux de manière à générer une zone non-éclairée par le premier dispositif d'éclairage entre la première bande lumineuse et la deuxième bande lumineuse, innovant en ce que le deuxième dispositif d'éclairage génère au moins une troisième bande lumineuse qui s'étend dans ladite zone, et en ce que le premier dispositif d'éclairage comprend un unique réflecteur qui réfléchit un premier faisceau lumineux générateur de la première bande lumineuse et un deuxième faisceau lumineux générateur de la deuxième bande lumineuse.

Le deuxième dispositif d'éclairage est agencé pour que la troisième bande recouvre la totalité de la zone non-éclairée par le premier dispositif d'éclairage sans chevaucher les bandes lumineuses adjacentes, notamment la première bande lumineuse et la deuxième bande lumineuse.

Selon une première caractéristique de l'invention, le premier émetteur lumineux est espacé du deuxième émetteur lumineux d'une distance déterminée par une largeur de la troisième bande lumineuse.

Selon une deuxième caractéristique de l'invention, le premier dispositif d'éclairage présente un premier axe optique, le deuxième dispositif d'éclairage présente un deuxième axe optique, le premier axe optique et le deuxième axe optique formant entre eux un angle non-nul.

Dans une telle situation, selon l'invention, l'angle est compris entre 0,5° et 4°, les valeurs comprises entre 1° et 2° convenant plus particulièrement en termes de performance et d'encombrement.

Selon encore une caractéristique de l'invention, le premier dispositif d'éclairage comprend un unique dispositif de focalisation qui focalise le premier faisceau lumineux et le deuxième faisceau lumineux. On comprend ici que le dispositif de focalisation est commun aux émetteurs lumineux constitutifs du premier dispositif d'éclairage.

Selon encore une autre caractéristique de l'invention, une largeur de la zone est égale à une largeur de la troisième bande lumineuse. Ainsi, la zone non-éclairée par le premier dispositif d'éclairage est comblée par une unique bande lumineuse émise par le deuxième dispositif d'éclairage.

On peut également préciser qu'une largeur de la zone non-éclairée est égale à un nombre entier de bandes lumineuses générées par le deuxième dispositif d'éclairage. Dans un tel cas, l'invention fait le choix d'espacer les émetteurs lumineux du premier dispositif d'éclairage d'une valeur correspondant à un multiple de la largeur d'une bande lumineuse générée par le deuxième dispositif d'éclairage.

Selon un exemple de réalisation, le premier dispositif d'éclairage comprend au moins le premier émetteur lumineux installé entre le deuxième émetteur lumineux et un quatrième émetteur lumineux, le premier émetteur lumineux, le deuxième émetteur lumineux et le quatrième émetteur lumineux étant alignés sur le support, le deuxième dispositif d'éclairage comprend au moins un troisième émetteur lumineux générateur de la troisième bande lumineuse et installé entre un cinquième émetteur lumineux et un sixième émetteur lumineux, le troisième émetteur lumineux, le cinquième émetteur lumineux et le sixième émetteur lumineux étant alignés sur un châssis, l'intensité lumineuse émise par le premier émetteur lumineux et/ou par le troisième émetteur lumineux étant supérieure à l'intensité lumineuse émise par l'un quelconque des autres émetteurs lumineux.

Avantageusement, le deuxième dispositif d'éclairage comprend un unique réflecteur qui réfléchit un faisceau lumineux émis au moins par le troisième émetteur lumineux, le cinquième émetteur lumineux et/ou le sixième émetteur lumineux.

Avantageusement encore, le deuxième dispositif d'éclairage comprend un unique dispositif de focalisation qui focalise le faisceau lumineux émis par le troisième émetteur lumineux, le cinquième émetteur lumineux et/ou le sixième émetteur lumineux.

Comme pour le premier dispositif d'éclairage, cette structure permet de limiter le nombre de pièces nécessaires à la fonction en communalisant le réflecteur et/ou le dispositif de focalisation pour plusieurs émetteurs lumineux.

Selon une autre caractéristique de l'invention, la pluralité de bandes lumineuses générée par le premier dispositif d'éclairage et par le deuxième dispositif d'éclairage forme un faisceau global, notamment pour réaliser un faisceau route d'un véhicule automobile, ledit module comprenant au moins un moyen d'éclairage additionnel destiné à former un faisceau de bord adjacent au faisceau global. Alors que les bandes lumineuses forment chacune un rectangle allongé, le moyen d'éclairage additionnel est agencé pour former un faisceau de bord dont la forme est, par exemple, un quart de cercle.

Selon encore une variante de réalisation de l'invention, le premier dispositif d'éclairage et/ou le deuxième dispositif d'éclairage comprennent un cache dans lequel est ménagée une fente pour délimiter une bande lumineuse à partir d'un émetteur lumineux projetant un faisceau lumineux diffus. La forme rectangulaire et allongée des bandes lumineuses est ainsi réalisée par un cache qui laisse passer les rayons de lumière requis. Une telle solution permet d'employer des émetteurs lumineux dont le faisceau est plus vaste, ces émetteurs lumineux présentant un coût plus faible qu'un émetteur présentant un faisceau en forme de bande.

L'invention couvre également un projecteur avant pour véhicule automobile comprenant au moins un module d'éclairage selon l'une quelconque des caractéristiques détaillées ci-dessus.

Enfin, l'invention couvre un ensemble d'éclairage d'un véhicule automobile comprenant deux projecteurs apte à être installés l'un à l'avant droit du véhicule et l'autre à l'avant gauche du véhicule, comprenant au moins un module d'éclairage selon l'une quelconque des caractéristiques évoquées ci-dessus, dans lequel le premier dispositif d'éclairage est installé dans l'un des projecteurs alors qu'au moins le deuxième dispositif d'éclairage est installé dans l'autre projecteur.

Un tout premier avantage de l'invention réside dans la possibilité de générer aisément un faisceau globale constitué d'une pluralité de faisceaux partiels en forme de bande lumineuse, aucune fente non-éclairée n'apparaissant dans le faisceau globale.

Un autre avantage réside dans la possibilité d'intégrer ce module très facilement dans un projecteur puisqu'il comporte moins de pièces que les solutions de l'art antérieur.

D'autres caractéristiques, détails et avantages de l'invention ressortiront plus clairement à la lecture de la description donnée ci-après à titre indicatif en relation avec des dessins dans lesquels :
- la figure 1 est une vue schématique d'un module d'éclairage selon l'invention,
- la figure 2 est une vue en perspective d'un dispositif d'éclairage utilisé dans le module d'éclairage selon l'invention,
- la figure 3 est une vue en perspective du support constitutif d'un dispositif d'éclairage de la figure 2, illustrant la distance déterminée qui sépare les émetteurs lumineux,
- la figure 4 est une représentation de la projection lumineuse générée par le premier dispositif d'éclairage,
- la figure 5 est une représentation du faisceau globale d'un module d'éclairage selon l'invention,
- la figure 6 est une vue de face d'un ensemble d'éclairage selon l'invention.

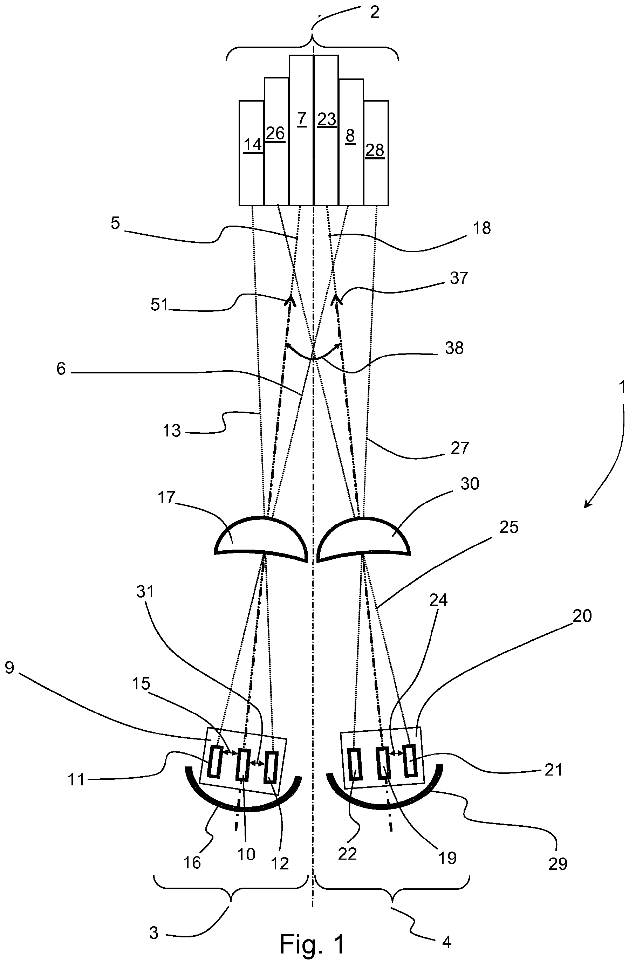

La figure 1 illustre un module d'éclairage 1 destiné à équiper un véhicule automobile. Un tel module 1 est agencé pour mettre en œuvre la fonction ADB, c'est-à-dire un allumage et une extinction sélectifs d'un faisceau lumineux de type route. Un tel module d'éclairage génère donc un faisceau global 2 à partir d'une juxtaposition de faisceaux partiels, ci-après nommé première bande lumineuse, deuxième bande lumineuse et troisième bande lumineuse.

Ce module d'éclairage 1 comprend au moins un premier dispositif d'éclairage 3 et un deuxième dispositif d'éclairage 4, avantageusement distinct du premier dispositif d'éclairage 3. Le premier module d'éclairage 3 assure la fourniture d'au moins un premier faisceau lumineux 5 et d'un deuxième faisceau lumineux 6, ces faisceaux formant chacun une bande lumineuse de forme rectangulaire, respectivement nommée première bande lumineuse 7 et deuxième bande lumineuse 8.

Le premier dispositif d'éclairage 3 comprend un support 9 sur lequel sont solidarisés un premier émetteur lumineux 10 et un deuxième émetteur lumineux 11. Ce support 9 est ainsi une pièce commune à la pluralité d'émetteurs lumineux constitutive du premier dispositif d'éclairage 3. Ce support est par exemple formé par une carte de circuit imprimé sur laquelle sont soudés les émetteurs lumineux, ces derniers prenant notamment la forme de diode électroluminescente.

Selon l'exemple de réalisation de la figure 1, le dispositif d'éclairage comprend un quatrième émetteur lumineux 12 solidarisé sur le support 9.

Le premier émetteur lumineux 10 est générateur du premier faisceau lumineux 5, le deuxième émetteur lumineux 11 est générateur du deuxième faisceau lumineux 6 et le quatrième émetteur lumineux 12 est générateur d'un quatrième faisceau lumineux 13, celui-ci formant une bande lumineuse de forme rectangulaire et allongé référencée 14.

Chacun de ces faisceaux lumineux s'étend selon un axe optique, celui-ci correspondant à une droite dans laquelle s'étend le faisceau lumineux concerné. Sur la figure 1, ces axes optiques sont confondus avec le premier faisceau 5, le deuxième faisceau 6 et le quatrième faisceau 13.

La pluralité de faisceaux générée par le premier dispositif d'éclairage 3 forme un faisceau intermédiaire qui s'étend selon un premier axe optique 51, celui-ci étant la résultante des axes optiques de chacun des faisceaux du premier dispositif d'éclairage 3. Selon l'exemple de la figure 1, ce premier axe optique 51 est confondu avec l'axe optique du premier faisceau 5 car la distance qui sépare le premier émetteur lumineux 10 du deuxième émetteur lumineux 11 est égale à la distance qui sépare le premier émetteur lumineux 10 du quatrième émetteur lumineux 12. Bien entendu, l'invention couvre le cas ou ces distances ne sont pas égales, ce qui se traduit par un premier axe optique 51 décalé par rapport au premier faisceau 5.

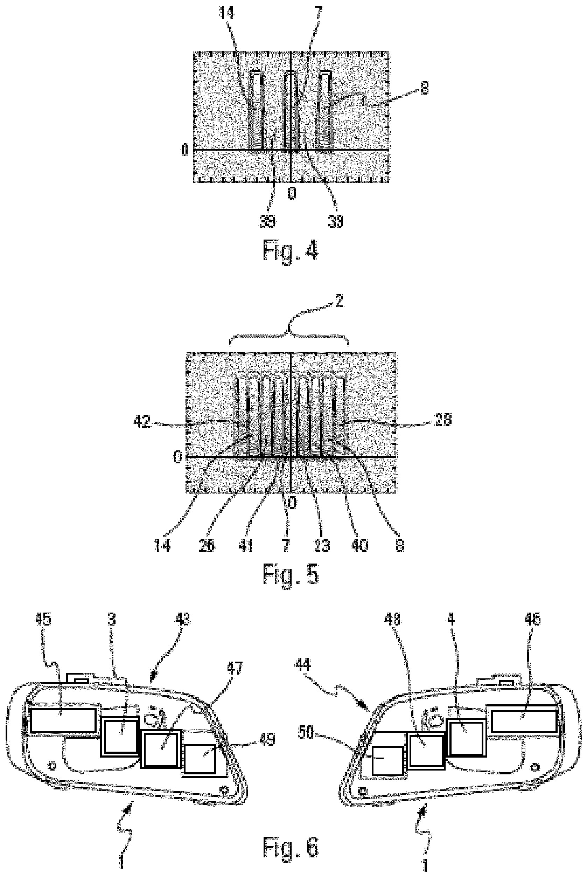

Le premier émetteur lumineux 10 et le deuxième émetteur lumineux 11 sont solidarisés sur le support 9 de manière espacée l'un de l'autre. Autrement dit, ces deux émetteurs lumineux ne sont pas accolés l'un à l'autre. La distance 15 qui sépare le premier émetteur lumineux 10 du deuxième émetteur lumineux 11 est génératrice d'une zone non-éclairée par le premier dispositif d'éclairage 3, cette zone étant plus particulièrement visible sur la figure 4. Cette zone non-éclairée par le premier dispositif d'éclairage 3 est située entre le premier faisceau lumineux 5 et le deuxième faisceau lumineux 6 et elle forme ainsi une bande sombre entre la première bande lumineuse 7 et la deuxième bande lumineuse 8.

Bien entendu, une telle distance, ici référencée 31, est également mise en œuvre entre le premier émetteur lumineux 10 et le quatrième émetteur lumineux 12 dans le même objectif que détaillé ci-dessus, c'est-à-dire pour former une autre zone non-éclairée par le premier dispositif d'éclairage 3.

Ces distances 15 ou 31 qui séparent les émetteurs lumineux sont choisies de manière déterminée, pour la bande sombre présente une largeur équivalente à une bande lumineuse émise par le deuxième dispositif d'éclairage 4.

Le premier dispositif d'éclairage 3 comprend également un réflecteur 16 dont la fonction est de collecter les rayons lumineux émis par le premier émetteur lumineux 10, le deuxième émetteur lumineux 11, et tout émetteur lumineux supplémentaire, notamment le quatrième émetteur lumineux 12, que le premier dispositif d'éclairage 3 peut comprendre. Ainsi, un seul et unique réflecteur 16 permet de renvoyer le faisceau lumineux émis par une pluralité d'émetteurs lumineux 10, 11 et/ou 12.

Le premier dispositif d'éclairage 3 comprend encore un dispositif de focalisation 17 dont la fonction est focaliser le premier faisceau 5, le deuxième faisceau 6 et éventuellement tous les autres faisceaux générés par des émetteurs lumineux solidarisés sur le support 9. On comprend donc qu'il s'agit d'un seul et unique dispositif de focalisation qui est mis à profit pour générer plusieurs bandes lumineuses 7, 8, 14 constitutives du faisceau globale 2. Selon un exemple de réalisation, un tel dispositif de focalisation 17 est une lentille présentant une face plane et une face concave.

Le deuxième dispositif d'éclairage 4 est agencé dans le module d'éclairage 1, c'est-à-dire par rapport au premier module d'éclairage 3, de manière à générer au moins un troisième faisceau lumineux 18 qui s'étend dans ladite zone non-éclairée par le premier dispositif d'éclairage 3.

Un tel deuxième dispositif d'éclairage 4 comprend ainsi au moins un troisième émetteur lumineux 19 qui est à l'origine du troisième faisceau lumineux 18, pour générer une troisième bande lumineuse 23.

Selon l'exemple de réalisation de la figure 1, le deuxième dispositif d'éclairage 4 présente une structure similaire à la structure du premier dispositif d'éclairage 3 détaillée ci-dessus. D'une manière générale, le deuxième dispositif d'éclairage 4 comprend au moins autant d'émetteurs lumineux que de zones non-éclairées créées par le premier dispositif d'éclairage 3. Dans le cas présent, le deuxième dispositif d'éclairage comprend un châssis 20, autrement appelé support, commun au troisième émetteur lumineux 19, à un cinquième émetteur lumineux 21 et à un sixième émetteur lumineux 22.

Le troisième émetteur lumineux 19 est générateur du troisième faisceau 18 qui se traduit par la bande lumineuse 23, cette dernière s'étendant dans la zone non-éclairée par le premier dispositif d'éclairage 3 située entre la première bande lumineuse 7 et la deuxième bande lumineuse 8.

De manière similaire, le cinquième émetteur lumineux 21 est installé sur le châssis 20 à une distance 24 du troisième émetteur lumineux 19 de sorte à générer un cinquième faisceau lumineux 25 qui vient couvrir la zone non-éclairée par le premier dispositif d'éclairage 3 située entre la première bande lumineuse 7 et la quatrième bande lumineuse 14. Ainsi, le cinquième faisceau lumineux 25 forme une cinquième bande lumineuse 26.

On notera que le sixième émetteur lumineux 22 produit un sixième faisceau lumineux 27 qui se traduit par une sixième bande lumineuse 28 adjacente à la deuxième bande lumineuse 8, à l'opposé de la troisième bande lumineuse 23 par rapport à cette deuxième bande lumineuse 8.

Selon un exemple de réalisation, le deuxième dispositif d'éclairage 4 comprend un unique réflecteur 29 et/ou un unique dispositif de focalisation 30. On se reportera à la description détaillée ci-dessus du réflecteur 16 et du dispositif de focalisation 17 du premier dispositif d'éclairage 3, cette description s'appliquant mutatis-mutandis au réflecteur 29 et au dispositif de focalisation 30 du deuxième dispositif d'éclairage 4.

Bien entendu, l'invention couvre également le cas où le deuxième dispositif d'éclairage 4 présente une structure différente du premier dispositif d'éclairage 3, pour autant que celui-ci assure la fourniture d'une ou plusieurs bandes lumineuses au droit de la ou des zones non-éclairées par le premier dispositif d'éclairage 3.

Selon un exemple de réalisation, les émetteurs détaillés ci-dessus sont rectangulaires de manière à former directement le faisceau lumineux pour que celui-ci forme une bande lumineuse rectangulaire et allongée. Ainsi, les bords latéraux de chaque bande lumineuse sont déterminés par l'émetteur lumineux, notamment quand il s'agit de diode électroluminescente.

Selon l'invention, la distance 15 qui sépare le premier émetteur lumineux 10 du deuxième émetteur lumineux 11 est déterminée de sorte qu'une largeur de la zone non-éclairée par le premier dispositif d'éclairage 3 soit égale à une largeur de la troisième bande lumineuse 23 générée par le deuxième dispositif d'éclairage 4.

De manière complémentaire, cette distance 15 est choisie pour que la largeur de la zone non éclairée par le premier dispositif d'éclairage 3 soit égale à un nombre entier de faisceaux générés par le deuxième dispositif d'éclairage 4. Ainsi, il est envisagé que le deuxième dispositif d'éclairage 4 couvre ladite zone par deux, trois ou quatre bandes lumineuses chacune générées par un émetteur lumineux propre.

Bien entendu, la distance 24 entre le troisième émetteur lumineux 19 et le cinquième émetteur lumineux 21 est également déterminée par la largeur de la zone non-éclairée par le premier dispositif d'éclairage 3 située entre la première bande lumineuse 7 et la quatrième bande lumineuse 14.

La figure 1 montre encore l'inclinaison angulaire entre le premier dispositif d'éclairage 3 et le deuxième dispositif d'éclairage 4.

Le premier axe optique 51 définit le positionnement du premier dispositif d'éclairage 3. Le troisième faisceau lumineux 18 s'étend également selon un deuxième axe optique 37 déterminé par le positionnement du deuxième dispositif d'éclairage 4. Le chevauchement des zones non-éclairées par le premier dispositif d'éclairage 3 par la ou les bandes lumineuses générées par le deuxième dispositif d'éclairage 4 intervient quand ce deuxième axe optique 37 forme un angle 38 non nul avec le premier axe optique 51.

Une distorsion des faisceaux lumineux est acceptable quand cet angle 38 est limité à 4°, la borne inférieure de 0,5° constituant l'angle minimum pour réaliser la fonction de chevauchement, autrement appelée entrelacement des bandes lumineuses. On notera que les valeurs comprises entre 1° et 2° sont particulièrement appropriées pour les véhicules automobiles actuels.

On comprend ainsi de ce qui précède que les faisceaux lumineux générés par le premier dispositif d'éclairage 3 et par le deuxième dispositif d'éclairage 4 s'entrelacent de manière à former un faisceau global, tout en donnant la possibilité d'éteindre l'un ou l'autre des faisceaux en vue de remplir la fonction ADB.

Le faisceau global 2 visible sur la figure 1 présente une forme pyramidale. On renforce ainsi l'éclairage dans l'axe de la route empruntée par le véhicule. Une telle fonction est obtenue par le fait que certains des émetteurs constitutifs du premier dispositif d'éclairage 3 et du deuxième dispositif d'éclairage 4 présentent une intensité lumineuse différente des autres. L'intensité lumineuse émise par le premier émetteur lumineux 10 et/ou par le troisième émetteur lumineux 19 est supérieure à l'intensité lumineuse émise par l'un quelconque des autres émetteurs. De manière optionnelle, l'intensité lumineuse du deuxième émetteur lumineux 11 et du cinquième émetteur lumineux 21 est également supérieure à l'intensité lumineuse fournie par le quatrième émetteur lumineux 21 et le sixième émetteur lumineux 22.

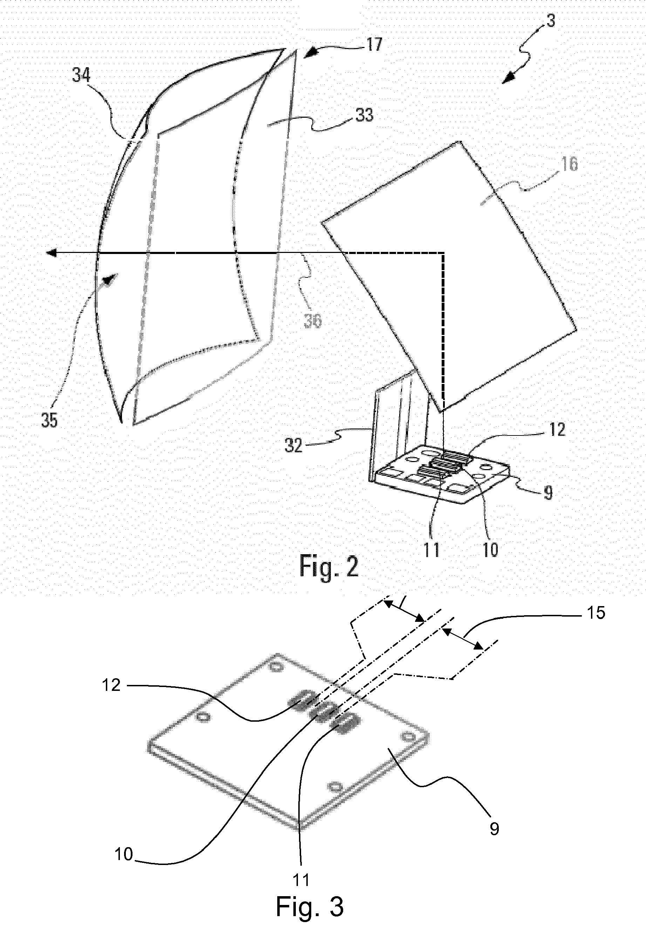

La figure 2 montre un exemple de réalisation d'un dispositif d'éclairage utilisé dans le module d'éclairage selon l'invention. La description ci-dessous sera faite en rapport avec le premier dispositif d'éclairage 3 mais elle s'applique également aux autres dispositifs d'éclairage, notamment le deuxième dispositif d'éclairage 4, dans la variante où ceux-ci sont similaires.

Le support 9 est une plaque ou carte de circuit imprimé qui reçoit sur une même face le premier émetteur lumineux 10, le deuxième émetteur lumineux 11 et le troisième émetteur lumineux 12. Ceux-ci sont des diodes électroluminescentes de forme rectangulaire. Le support peut également recevoir des composants électroniques, par exemple, nécessaires à l'allumage ou à l'extinction de ces émetteurs.

Perpendiculairement au plan d'extension du support, on trouve un obturateur 32 dont la fonction est d'empêcher une émission directe des rayons de lumière générés par les émetteurs vers le dispositif de focalisation 17. Cet obturateur peut notamment présenter une surface réfléchissante de manière à renvoyer ces rayons vers le réflecteur 16. Ce dernier prend par exemple une forme parabolique, ou éventuellement elliptique.

Le dispositif de focalisation 17 est une lentille présentant une première face 33 qui fait directement face au réflecteur 16. Cette première face 33 est ici cylindrique, d'axe vertical.

La lentille est délimitée par une deuxième face 34 qui est opposée à la première face 33 par rapport à un corps 35 de la lentille. Cette deuxième face 34 présente une forme concave vue de la première face 33.

Les faisceaux lumineux, représentés ici globalement par une flèche référencée 36, sont émis par les émetteurs 10 à 12 et viennent frapper une surface du réflecteur 16. Ce dernier les redirige vers le dispositif de focalisation 17 pour se projeter sur la route à emprunter par le véhicule.

La figure 3 montre en détails le support 9 et en particulier le positionnement des émetteurs les uns par rapport aux autres. Les émetteurs représentés sur cette figure sont des diodes électroluminescentes de forme rectangulaire. Le premier émetteur lumineux 10 est ainsi espacé du deuxième émetteur lumineux 11 de la distance référencée 15. Le quatrième émetteur lumineux 12 est également installé à côté du premier émetteur lumineux 10 mais séparé de celui-ci par la distance référencée 31, cette dernière étant par exemple égale à la distance 15. On notera que le premier émetteur lumineux 10, le deuxième émetteur lumineux 11, et éventuellement le troisième émetteur lumineux 12, s'étendent chacun selon des directions parallèles. Selon un exemple de réalisation, le premier émetteur lumineux 10, le deuxième émetteur lumineux 11 et le quatrième émetteur lumineux 12 sont alignés sur une même droite. Chaque émetteur lumineux étant de forme rectangulaire, la droite en question passe par un même côté de chacun des émetteurs, ceux-ci formant alors une rangée sur le support 9.

Il en va de même pour le deuxième dispositif d'éclairage où le troisième émetteur lumineux est installé entre le cinquième émetteur lumineux et le sixième émetteur lumineux. Le troisième émetteur lumineux, le cinquième émetteur lumineux et le sixième émetteur lumineux sont alignés sur le châssis de manière similaire au premier dispositif d'éclairage 3.

La figure 4 montre les bandes lumineuses générées par le premier dispositif d'éclairage 3. Cette figure met en évidence la présence des zones 39 non-éclairées par le premier dispositif d'éclairage.

On voit sur cette figure la bande lumineuse centrale 7 générée par le premier émetteur lumineux 10, la deuxième bande lumineuse 8 créée par le deuxième émetteur lumineux 11 et la quatrième bande lumineuse 14 générée par le quatrième émetteur lumineux 12. Entre ces bandes lumineuses sont visibles les zones non-éclairées référencées ici 39.

La figure 5 montre un faisceau global 2 issu d'un module d'éclairage 1 comprenant trois dispositifs d'éclairage distincts, chacun comportant trois émetteurs lumineux solidaires d'un même support et espacés les uns des autres. Ces trois dispositifs d'éclairage sont agencés, c'est-à-dire inclinés les uns par rapport aux autres, de manière à ce qu'au moins un faisceau émis par chaque dispositif d'éclairage comble une zone non-éclairée par l'un ou l'autre des dispositifs d'éclairage. Dans cet exemple particulier, chaque zone non-éclairée présente une largeur égale à deux fois la largeur d'une bande lumineuse.

Ainsi, ce faisceau global 2 est constitué de neuf bandes lumineuses émises par trois dispositifs d'éclairage. Le premier dispositif d'éclairage génère la première bande lumineuse 7, la deuxième bande lumineuse 8 et la quatrième bande lumineuse 14. Le deuxième dispositif d'éclairage génère la troisième bande lumineuse 23, la cinquième bande lumineuse 26 et la sixième bande lumineuse 28, la troisième bande lumineuse 23 s'étendant entre la premier bande lumineuse 7 et la deuxième bande lumineuse 8 alors que la cinquième bande lumineuse 26 s'étend entre la première bande lumineuse 7 et la quatrième bande lumineuse 14. Le troisième dispositif d'éclairage génère une septième bande lumineuse 40, une huitième bande lumineuse 41 et une neuvième bande lumineuse 42, la septième bande lumineuse 40 s'étendant entre la troisième bande lumineuse 23 et la deuxième bande lumineuse 8 alors que la huitième bande lumineuse 41 s'étend entre la première bande lumineuse 7 et la cinquième bande lumineuse 26. La sixième bande lumineuse 28 et la neuvième bande lumineuse 42 forment des bandes extrêmales du faisceau global 2.

On comprend donc que, selon cet exemple de réalisation, le premier dispositif d'éclairage, le deuxième dispositif d'éclairage et le troisième dispositif d'éclairage sont agencés pour qu'une zone non-éclairée par le premier dispositif d'éclairage soit comblée par un faisceau en provenance du deuxième dispositif d'éclairage combiné à un faisceau provenant du troisième dispositif d'éclairage.

Selon la variante illustrée sur cette figure, l'intensité lumineuse émise par les émetteurs lumineux constitutifs des dispositifs d'éclairage est identique pour chaque émetteur lumineux.

La figure 6 illustre une implantation du module d'éclairage 1 selon l'invention dans un ensemble d'éclairage apte à équiper un véhicule automobile, comprenant deux projecteurs vue de face, installés l'un à l'avant droit du véhicule et l'autre à l'avant gauche du véhicule.

En ce qui concerne le faisceau route, le module d'éclairage 1 est ici scindé en deux parties puisque le premier dispositif d'éclairage 3 est installé dans un premier projecteur 43 alors que le deuxième dispositif d'éclairage 4 est installé dans un deuxième projecteur 44, distinct du premier projecteur 43. Selon cet exemple d'implantation, le module d'éclairage 1 comprend un troisième dispositif d'éclairage 48, par exemple conforme à celui détaillé en rapport avec les figures 1 ou 5, installé dans le deuxième projecteur 44.

Le premier projecteur 43 comprend encore un premier moyen d'éclairage 45 participant à la production d'un faisceau code alors que le deuxième projecteur 44 comprend un deuxième moyen d'éclairage 46 participant à la production du même faisceau code.

Le premier projecteur comprend également un dispositif d'éclairage de longue portée 47 destiné à fournir un faisceau lumineux de grande distance, particulièrement utile pour une conduite sur autoroute.

Le module d'éclairage 1 selon l'invention est complété par au moins un moyen d'éclairage additionnel destiné à former un faisceau de bord adjacent au faisceau global. Un tel faisceau de bord donne de la largeur au faisceau global et permet ainsi d'éclairer le coté de la route empruntée par le véhicule.

Un premier moyen d'éclairage additionnel 49 est installé dans le premier projecteur 43 et il est agencé pour former un premier faisceau lumineux, par exemple, en forme de quart de cercle qui jouxte l'une des deux bandes lumineuses extrêmales du faisceau global, référencée 14 sur la figure 1 ou 42 sur la figure 5. De même, le module d'éclairage 1 comprend un deuxième moyen d'éclairage additionnel 50 installé dans le deuxième projecteur 44, celui-ci étant agencé pour former un deuxième faisceau lumineux, par exemple, en forme de quart de cercle qui jouxte l'autre bande lumineuse extrêmale du faisceau global, celle-ci étant référencée 28 sur les figures 1 et 5.

Dans la description ci-dessus, les émetteurs employés génère un faisceau lumineux en forme de bande lumineuse. L'invention couvre également l'emploi d'émetteur lumineux générateur d'un faisceau diffus sur le trajet duquel est installé un cache comprenant une fente qui délimite un faisceau résiduel en forme de bande lumineuse. Dans un tel cas, il est prévu une fente par émetteur lumineux.

Les bandes lumineuses détaillées dans la description ci-dessous sont par exemple des bandes à coupure nette. Le module d'éclairage 1 selon l'invention est agencé pour que ces bandes lumineuses se jouxtent sans laisser apparaître des bandes sombres, et éventuellement sans chevauchement entre bandes lumineuses adjacentes.

## Revendications

1. Module d'éclairage (1) comprenant au moins un premier dispositif d'éclairage (3) et un deuxième dispositif d'éclairage (4), le premier dispositif d'éclairage (3) comprend un support (9) commun à au moins un premier émetteur lumineux (10) et à au moins un deuxième émetteur lumineux (11), le premier émetteur lumineux (10) étant espacé par rapport au deuxième émetteur lumineux (11) de manière à générer une fenêtre (39) non-éclairée par le premier dispositif d'éclairage (3), **caractérisé en ce que** le deuxième dispositif d'éclairage (4) génère au moins une bande lumineuse (23) qui vient combler ladite fenêtre (39), et **en ce que** le premier dispositif d'éclairage (3) présente un premier axe optique (51), le deuxième dispositif d'éclairage présente un deuxième axe optique (37), le premier axe optique (51) et le deuxième axe optique (37) formant entre eux un angle (38) non-nul compris entre 0,5° et 4° .

2. Module selon la revendication 1, dans lequel le premier émetteur lumineux (10) est générateur d'une première bande lumineuse (7), le deuxième émetteur lumineux (11) est générateur d'une deuxième bande lumineuse (8), la fenêtre non-éclairée est entre la première bande lumineuse (7) et la deuxième bande lumineuse (8), et la bande lumineuse (23) formée par le deuxième dispositif d'éclairage et qui vient combler ladite fenêtre (39) formant une troisième bande lumineuse.

3. Module selon la revendication 2, dans lequel le premier émetteur lumineux (10) est espacé du deuxième émetteur lumineux (11) d'une distance déterminée par une largeur de la troisième bande lumineuse (23).

4. Module selon l'une quelconque des revendications précédentes, dans lequel l'angle (38) est compris entre 1° et 2°.

5. Module selon l'une quelconque des revendications précédentes, dans lequel le premier dispositif d'éclairage (3) comprend un unique dispositif de focalisation (17) qui focalise le premier faisceau lumineux (5) et le deuxième faisceau lumineux (6).

6. Module selon l'une quelconque des revendications précédentes, dans lequel une largeur de la fenêtre (39) est égale à un nombre entier de bandes lumineuses générées par le deuxième dispositif d'éclairage (4).

7. Module selon la revendication 6, dans lequel la largeur de la fenêtre (39) est égale à la largeur de la bande lumineuse (23) formée par le deuxième dispositif d'éclairage et qui vient combler ladite fenêtre (39).

8. Module selon l'une quelconque des revendications précédentes, dans lequel le premier dispositif d'éclairage (3) comprend au moins le premier émetteur lumineux (10) installé entre le deuxième émetteur lumineux (11) et un quatrième émetteur lumineux (12), le premier émetteur lumineux (10), le deuxième émetteur lumineux (11) et le quatrième émetteur lumineux (12) étant alignés sur le support (9), le deuxième dispositif d'éclairage (4) comprend au moins un troisième émetteur lumineux (19) installé entre un cinquième émetteur lumineux (21) et un sixième émetteur lumineux (22), le troisième émetteur lumineux (19), le cinquième émetteur lumineux (21) et le sixième émetteur lumineux (22) étant alignés sur un châssis (20), l'intensité lumineuse émise par le premier émetteur lumineux (10) et/ou par le troisième émetteur lumineux (19) étant supérieure à l'intensité lumineuse émise par l'un quelconque des autres émetteurs lumineux (11, 12, 21, 22).

9. Module selon la revendication 8, dans lequel le deuxième dispositif d'éclairage (4) comprend un unique réflecteur (29) qui réfléchit un faisceau lumineux (18) émis par le troisième émetteur lumineux (19), le cinquième émetteur lumineux (21) et/ou le sixième émetteur lumineux (22).

10. Module selon l'une quelconque des revendications 8 ou 9, dans lequel le deuxième dispositif d'éclairage (4) comprend un unique dispositif de focalisation (30) qui focalise un faisceau lumineux (18) émis par le troisième émetteur lumineux (19), le cinquième émetteur lumineux (21) et/ou le sixième émetteur lumineux (22).

11. Projecteur avant (43, 44) pour véhicule automobile comprenant au moins un module d'éclairage (1) selon l'une quelconque des revendications précédentes.

12. Ensemble d'éclairage d'un véhicule automobile comprenant deux projecteurs (43, 44) apte à être installés l'un à l'avant droit du véhicule et l'autre à l'avant gauche du véhicule, comprenant au moins un module d'éclairage (1) selon l'une quelconque des revendications 1 à 10, dans lequel le premier dispositif d'éclairage (3) est installé dans l'un des projecteurs (43) alors qu'au moins le deuxième dispositif d'éclairage (4) est installé dans l'autre projecteur (44).

## Patentansprüche

1. Beleuchtungsmodul (1) mit mindestens einer ersten Beleuchtungsvorrichtung (3) und einer zweiten Beleuchtungsvorrichtung (4), wobei die erste Beleuchtungsvorrichtung (3) einen Halter (9) aufweist, der mindestens einem ersten Lichtemitter (10) und mindestens einem zweiten Lichtemitter (11) gemeinsam ist, wobei der erste Lichtemitter (10) von dem zweiten Lichtemitter (11) derart beabstandet ist, dass ein Fenster (39) erzeugt wird, das von der ersten Beleuchtungsvorrichtung (3) nicht beleuchtet wird, **dadurch gekennzeichnet, dass** die zweite Beleuchtungsvorrichtung (4) mindestens einen Lichtstreifen (23) erzeugt, der das Fenster (39) ausfüllt, und dass die erste Beleuchtungsvorrichtung (3) eine erste optische Achse (51) aufweist, die zweite Beleuchtungsvorrichtung eine zweite optische Achse (37) aufweist, wobei die erste optische Achse (51) und die zweite optische Achse (37) einen von Null verschiedenen Winkel (38) zwischen 0,5° und 4° zueinander bilden.

2. Beleuchtungsmodul nach Anspruch 1, bei dem der erste Lichtemitter (10) einen ersten Lichtstreifen (7) erzeugt, der zweite Lichtemitter (11) einen zweiten Lichtstreifen (8) erzeugt, das nicht beleuchtete Fenster (39) sich zwischen dem ersten Lichtstreifen (7) und dem zweiten Lichtstreifen (8) befindet und der Lichtstreifen (23), der von der zweiten Beleuchtungsvorrichtung gebildet wird und der das Fenster (39) ausfüllt, einen dritten Lichtstreifen bildet.

3. Beleuchtungsmodul nach Anspruch 2, wobei der erste Lichtemitter (10) von dem zweiten Lichtemitter (11) um einen Abstand beabstandet ist, der durch eine Breite des dritten Lichtstreifens (23) bestimmt ist.

4. Beleuchtungsmodul gemäß einem der vorstehenden Ansprüche, wobei der Winkel (38) zwischen 1° und 2° liegt.

5. Beleuchtungsmodul nach einem der vorstehenden Ansprüche, wobei die erste Beleuchtungsvorrichtung (3) eine einzige Fokussierungsvorrichtung (17) aufweist, die den ersten Lichtstrahl (5) und den zweiten Lichtstrahl (6) fokussiert.

6. Beleuchtungsmodul nach einem der vorhergehenden Ansprüche, wobei eine Breite des Fensters (39) gleich einer ganzen Zahl von Lichtstreifen ist, die von der zweiten Beleuchtungsvorrichtung (4) erzeugt werden.

7. Beleuchtungsmodul nach Anspruch 6, wobei die Breite des Fensters (39) gleich der Breite des Lichtstreifens (23) ist, der durch die zweite Beleuchtungsvorrichtung gebildet wird und der das Fenster (39) ausfüllt.

8. Beleuchtungsmodul nach einem der vorstehenden Ansprüche, wobei die erste Beleuchtungsvorrichtung (3) mindestens den ersten Lichtemitter (10) umfasst, der zwischen dem zweiten Lichtemitter (11) und einem vierten Lichtemitter (12) installiert ist, wobei der erste Lichtemitter (10), der zweite Lichtemitter (11) und der vierte Lichtemitter (12) auf dem Träger (9) ausgerichtet sind, die zweite Beleuchtungsvorrichtung (4) mindestens einen dritten Lichtemitter (19) umfasst, der zwischen einem fünften Lichtemitter (21) und einem sechsten Lichtemitter (22) installiert ist, wobei der dritte Lichtemitter (19), der fünfte Lichtemitter (21) und der sechste Lichtemitter (22) auf einem Rahmen (20) ausgerichtet sind, wobei die von dem ersten Lichtemitter (10) und/oder von dem dritten Lichtemitter (19) emittierte Lichtintensität größer als die von einem der anderen Lichtemitter (11, 12, 21, 22) emittierte Lichtintensität ist.

9. Beleuchtungsmodul nach Anspruch 8, wobei die zweite Beleuchtungsvorrichtung (4) einen einzelnen Reflektor (29) aufweist, der einen Lichtstrahl (18) reflektiert, der von dem dritten Lichtemitter (19), dem fünften Lichtemitter (21) und/oder dem sechsten Lichtemitter (22) ausgesendet wird.

10. Beleuchtungsmodul nach einem der Ansprüche 8 oder 9, wobei die zweite Beleuchtungsvorrichtung (4) eine einzige Fokussierungsvorrichtung (30) umfasst, die einen Lichtstrahl (18) fokussiert, der von dem dritten Lichtemitter (19), dem fünften Lichtemitter (21) und/oder dem sechsten Lichtemitter (22) emittiert wird.

11. Scheinwerfer (43, 44) für ein Kraftfahrzeug mit mindestens einem Beleuchtungsmodul (1) nach einem der vorstehenden Ansprüche.

12. Beleuchtungseinheit für ein Kraftfahrzeug mit zwei Scheinwerfern (43, 44), von denen einer an der rechten Vorderseite des Fahrzeugs und der andere an der linken Vorderseite des Fahrzeugs installiert werden kann, mit mindestens einem Beleuchtungsmodul (1) nach einem der Ansprüche 1 bis 10, wobei die erste Beleuchtungsvorrichtung (3) in einem der Scheinwerfer (43) installiert ist, während mindestens die zweite Beleuchtungsvorrichtung (4) in dem anderen Scheinwerfer (44) installiert ist.

## Claims

1. Lighting module (1) comprising at least one first lighting device (3) and a second lighting device (4), the first lighting device (3) comprising a holder (9) common to at least one first light emitter (10) and at least one second light emitter (11), the first light emitter (10) being spaced apart from the second light emitter (11) so as to generate a window (39) which is not illuminated by the first lighting device (3), **characterized in that** the second illuminating device (4) generates at least one light strip (23) which fills the window (39), and **in that** the first illuminating device (3) has a first optical axis (51), the second illuminating device has a second optical axis (37), the first optical axis (51) and the second optical axis (37) forming a non-zero angle (38) of between 0.5° and 4° with respect to one another.

2. Module according to claim 1, in which the first light emitter (10) generates a first light strip (7), the second light emitter (11) generates a second light strip (8), the non-illuminated window is between the first light strip (7) and the second light strip (8), and the light strip (23) formed by the second illuminating device and which fills said window (39) forms a third light strip.

3. A module according to claim 2, wherein the first light emitter (10) is spaced apart from the second light emitter (11) by a distance determined by a width of the third light strip (23).

4. A module according to any of the foregoing claims, wherein the angle (38) is between 1° and 2°.

5. A module according to any of the preceding claims, wherein the first lighting device (3) comprises a single focusing device (17) which focuses the first light beam (5) and the second light beam (6).

6. A module according to any one of the preceding claims, wherein a width of the window (39) is equal to an integer number of light strips generated by the second lighting device (4).

7. A module according to claim 6, wherein the width of the window (39) is equal to the width of the light strip (23) formed by the second lighting device and which fills said window (39).

8. Module according to any of the preceding claims, wherein the first lighting device (3) comprises at least the first light emitter (10) installed between the second light emitter (11) and a fourth light emitter (12), the first light emitter (10), the second light emitter (11) and the fourth light emitter (12) being aligned on the support (9), the second lighting device (4) comprises at least one third light emitter (19) installed between a fifth light emitter (21) and a sixth light emitter (22), the third light emitter (19), the fifth light emitter (21) and the sixth light emitter (22) being aligned on a frame (20), the light intensity emitted by the first light emitter (10) and/or by the third light emitter (19) being greater than the light intensity emitted by any of the other light emitters (11, 12, 21, 22).

9. A module according to claim 8, wherein the second lighting device (4) comprises a single reflector (29) which reflects a light beam (18) emitted by the third light emitter (19), the fifth light emitter (21) and/or the sixth light emitter (22).

10. A module according to any one of claims 8 or 9, wherein the second lighting device (4) comprises a single focusing device (30) which focuses a light beam (18) emitted by the third light emitter (19), the fifth light emitter (21) and/or the sixth light emitter (22).

11. A front headlamp (43, 44) for a motor vehicle comprising at least one light module (1) according to any one of the preceding claims.

12. A lighting assembly for a motor vehicle comprising two headlamps (43, 44) adapted to be installed one at the right front of the vehicle and the other at the left front of the vehicle, comprising at least one lighting module (1) according to any one of claims 1 to 10, wherein the first lighting device (3) is installed in one of the headlamps (43) while at least the second lighting device (4) is installed in the other headlamp (44).
